# EUROPÄISCHE PATENTANMELDUNG

(11) **EP 0 545 239 A1**
(43) Veröffentlichungstag der Anmeldung: **09.06.1993**
(21) Anmeldenummer: 92120041.6
(22) Anmeldetag: 25.11.1992
(51) Int. Cl.: A47B 47/00, A47B 55/00, B29C 67/18

(54) **Schrankkorpus**

(30) Priorität: 03.12.1991 DE 4139780
(71) Anmelder: AMC International Alfa Metalcraft Corporation AG, CH-6343 Rotkreuz (CH)
(72) Erfinder: Anschütz, Theo, W-6349 Sinn-Edingen (DE)
(74) Vertreter: Wolf, Günter, Dipl.Ing.

(57) **Zusammenfassung**

Die Erfindung betrifft einen Schrankkorpus, insbesondere zur Verwendung als Schrankteil für aus entsprechenden Scharnkteilen zusammenfügbare Einbauküchenschrankwände, bestehend aus vier Wänden und aus einer Korpusrückwand, wobei zwei sich gegenüberstehende Wände (1, 2) und die Rückwand (5) aus einem Blechzuschnitt (6) gebildet und die mit Randabkantungen (7) versehenen beiden anderen Wände (3, 4) sind ebenfalls aus Blech mit ihren Abkantungen (7) in die freien Querschnitte zwischen Rückwand (5) und den beiden anderen Wänden (1, 2) eingefügt. Nach der Erfindung sind die Abkantungen (7) mit den benachbarten Rändern (8) der anderen Wände (1, 2) in je einen Rahmen (9) aus gießbarem Kunststoff miteinander eingebunden. Dadurch kann unter Vermeidung von Spalten und der herkömmlichen Verbindungsarten auf sehr einfache und fertigungsgünstige Weise die Verbindung der beteiligten Wände aus Blech, vorzugsweise aus dünnem Edelstahlblech erfolgen, wobei gleichzeitig für eine Stabilisierung des Schrankkorpus und für eine entsprechende Gestaltung, insbesondere der Sichtseite gesorgt ist.

## Beschreibung

Die Erfindung betrifft einen Schrankkorpus, insbesondere zur Verwendung als Schrankteil für aus entsprechenden Schrankteilen zusammenfügbare Einbauküchenschrankwände gemäß Oberbegriff des Patentanspruches 1.

Schrankkorpusse der genannten Art sind bspw. nach dem DE-U-74 12 649 bekannt. Neben solchen Schränken aus Blech werden Schränke bzw. deren Wände in der Regel aus mit Kunststoff furnierten Spanplattenzuschnitten von mindestens 16 mm Stärke hergestellt, die nach althergebrachter Schreinermanier durch Leimen, Verzapfen, Verschrauben od. dgl. Verbindungen miteinander zusammengefügt werden und die entsprechend schwer sind. Wegen seiner Korrosionsbeständigkeit, leichten Sauberhaltung und damit den hygienischen Anforderungen genügend hat die Verwendung von bspw. Edelstahlblech im ganzen Küchenbereich immer mehr Eingang gefunden, was jedoch, da solches Material entsprechend teuer ist, mit entsprechend hohen Kosten verbunden ist, d.h., soweit Schrankkorpusse für den genannten Zweck überhaupt schon aus Edelstahlblech gebildet sind (siehe DE-U-74 12 649), können diese vom Preis her gesehen, mit Schränken herkömmlicher Art nicht konkurrieren. Sofern man solche Schränke aus Blech an zu verbindenden Längskanten ihrer Wände nicht durch nachträgliche Verputzbearbeitung verlangendes Schweißen verbindet, entstehen aber bei anderen Verbindungsarten (bspw. Verschrauben, Verfalzen - siehe DE-A-30 13 433, Rollnaht -, Punktverschweißen), abgesehen vom damit verbundenen Fertigungsaufwand, unvermeidbar feine Spalte, in denen sich nur schwer entfernbarer Schmutz ansammeln und in denen auch Spaltkorrosion selbst bei Edelstahl auftreten kann. Um derartigen Schränken die notwendige Stabilität zu vermitteln, muß außerdem ziemlich starkes Blech verwendet werden, was mit der wesentliche Grund für den hohen Preis derartiger Schränke ist.

Da es beim Schrank gemäß DE-U-74 12 649 nur darum geht, den Schrankinnenraum durch umsteckbare sogenannte "Ständersäulen" beliebig gliedern zu können, müssen im übrigen die den Innenraum umschließenden Wände mit einer der vorgenannten Verbindungsarten miteinander verbunden werden, was beim Schrank gemäß DE-A-30 13 433 allein durch Verfalzen der Anschlußränder vorgesehen ist. Sowohl beim einen wie beim anderen Schrank sind dabei Spalte in den Anschlußbereichen der Wände unvermeidbar.

Ausgehend von einem Schrankkorpus der eingangs genannten Art liegt der Erfindung die Aufgabe zugrunde, diesen dahingehend auszubilden, daß unter Vermeidung von Spalten und der herkömmlichen Verbindungsarten auf sehr einfache und fertigungsgünstige Weise die Verbindung der beteiligten Wände aus Blech, vorzugsweise aus dünnem Edelstahlblech erfolgen kann, und zwar verbunden mit der Maßgabe, dabei gleichzeitig für eine Stabilisierung des Schrankkorpus und für eine entsprechende Gestaltung, insbesondere der Sichtseite sorgen zu können.

Diese Aufgabe ist mit einem Schrankkorpus der eingangs genannten Art nach der Erfindung durch die im Kennzeichen des Patentanspruches 1 angeführten Merkmale gelöst. Vorteilhafte Weiterbildungen ergeben sich nach den Unteransprüchen.

Mit dieser erfindungsgemäßen Ausbildung ist praktisch auch ein neues Verfahren zur Herstellung derartiger Schrankkorpusse verbunden, da ein solcher Korpus, der zunächst nur aus Blech besteht, lediglich mit seinem unteren Bodenteil bzw. nach Umkehrung mit seinem oberen Deckenteil in eine mit dem Kunststoff gefüllte, der Rahmenform angepaßten Tauchrinne eingesetzt bzw. eingetaucht werden muß, und nach kurzer Aushärtezeit des Kunststoffes nunmehr mit dem Kunststoffrahmen, der die Wände zusammenhält, entnommen werden kann. Um die drei Blechteile ggf. vor dem Eintauchen schon einigermaßen fest zusammenzufügen, was aber noch nicht einmal zwingend notwendig ist, da ohne weiteres der Blechzuschnitt und dann sofort das Boden- bzw. Deckblech in die rahmenförmige Tauchrinne eingesetzt werden können, genügen nur wenige Blechschrauben oder Klammern, die im Kunststoffrahmen einfach mit eingebunden werden und nach außen nicht mehr sichtbar sind. Die Tiefe der Tauchrinne ist dabei so bemessen, daß die in das Korpusinnere weisenden Flächen der den Boden und die Decke bildenden Wände vom Kunststoff gerade noch freibleiben.

Da der flüssige Kunststoff in der Tauchrinne auch in die am Blechkorpus vorhandene Spalte beim Eintauchen eindringt, werden auch diese voll ausgefüllt, und es schließen sich auch die inneren Eckfugen aufgrund von Kapillarwirkung aufsteigenden Kunststoffes, so daß diese Eckfugen einer Schmutzansammlung nicht mehr zugängig sind und leicht sauber gehalten werden können, zumal dort, wie sich gezeigt hat, der Kunststoff Hohlkehlen bildet. Im übrigen wird die Ausführungsform mit einer Gesamtkombination der Ansprüche 1 bis 6 bevorzugt.

Abgesehen von dieser außerordentlich günstigen Herstellungs-methode und der Stabilisierung des Schrankkorpusses durch die Rahmen, haben diese aber noch einen weiteren und besonderen Vorteil. Es ist nämlich nicht mehr wie bisher zwingend erforderlich, derartige Schrankkorpusse in aufwendigen und später zu entsorgenden und zusätzliche Kosten verursachenden Kartonagen verpackt zu lagern und zu transportieren, da dies, was noch näher erläutert wird, durch die Rahmen entbehrlich ist, die bei Lagerung und Transport gestapelter Schrankkorpusse diese auf Abstand halten. Außerdem ist das Gewicht des Schrankkorpus im Vergleich zu Spanplattenkonstruktionen bis zu 50 % reduziert, da aufgrund der Rahmenausbildung Edelstahlblech mit einer Stärke von nur 0,6 mm verwendet werden kann.

Der erfindungsgemäße Schrankkorpus und seine vorteilhaften Weiterbildungsformen werden nachfolgend anhand der zeichnerischen Darstellung von Ausführungsbeispielen näher erläutert.

Es zeigt schematisch
- Fig. 1, 2: perspektivisch und noch nicht zusammengefügt die den Schrankkorpus bildenden Blechteile;
- Fig. 3 - 5: Vorder-, Seiten- und Draufsichten des Schrank korpusses in bevorzugter Ausführungsform;
- Fig. 6: eine Draufsicht auf einen der beiden Kunststoffrahmen;
- Fig. 7: perspektivisch den Kunststoffrahmen gemäß Fig. 6;
- Fig. 8: perspektivisch die rahmenförmige Tauchrinne für die Herstellung der Kunststoffrahmen;
- Fig. 9: einen Schnitt Längslinie IX/IX in Fig. 6 durch den Rahmen mit den eingebundenen Abkantungen und Blechrändern;
- Fig. 10: einen Schnitt Längslinie X/X in Fig. 9 durch benachbart angeordnete Rahmen zweier Schrank korpusse;
- Fig. 11: einen Schnitt Längslinie XI/XI in Fig. 1 mit besonderer Ausbildung eines nicht abgekanteten Blechrandes der Wände des Blechzuschnittes;
- Fig. 12: perspektivisch eine besonders einfache Ausführungsform des Schrankkorpusses und
- Fig. 13: perspektivisch ein Ausführungsbeispiel der zum Schrankkorpus gemäß Fig. 12 gehörenden Rahmenausbildung.

Der zur Verwendung als Schrankteil für aus entsprechenden Schrankteilen zusammenfügbare Einbauküchen-schrankwände bestimmte Schrankkorpus 10 besteht aus vier Wänden 1-4 und aus einer Korpusrückwand. Für einen solchen Schrankkorpus 10 ist nun wesentlich, daß zwei sich gegenüberstehende Wände 1, 2 und die Rückwand 5 aus einem Blechzuschnitt 6 gebildet sind, wobei die mit Randabkantungen 7 versehenen beiden anderen Wände 3, 4 ebenfalls aus Blech mit ihren Abkantungen 7 in die freien Querschnitte zwischen Rückwand und den beiden anderen Wänden 1, 2 einfügt sind. Die Abkantungen 7 der Wände 3, 4 sind mit den benachbarten Rändern 8 der anderen Wände 1, 2 in je einem Rahmen 9 aus gießbarem Kunststoff miteinander eingebunden.

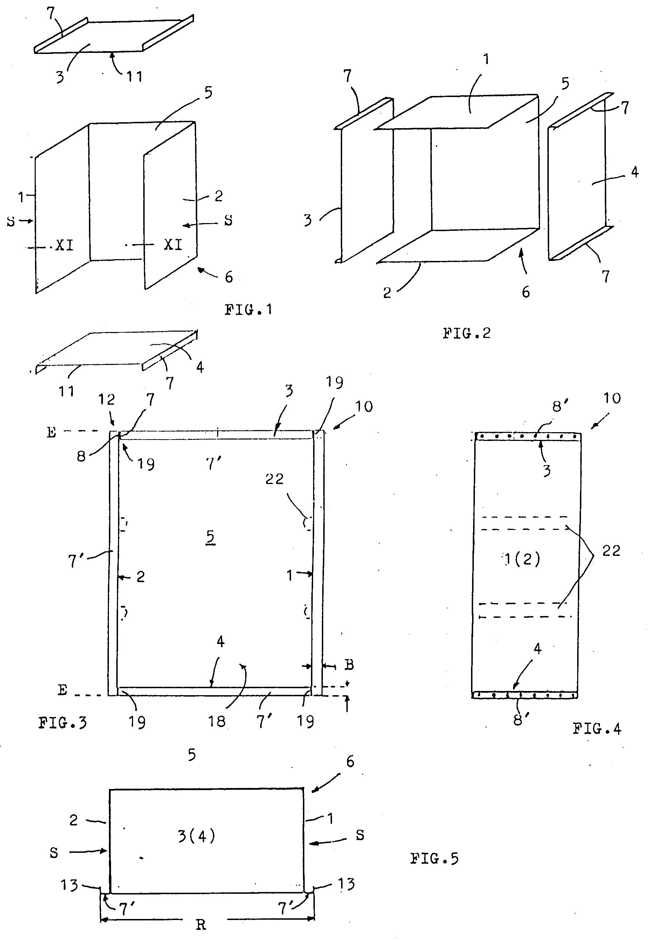

Für die Aufhängung oder Aufstellung des Schrankes und die Rahmenausbildung spielt es praktisch keine Rolle, ob dies mit einer Orientierung im Sinne der Fig. 1 oder der Fig. 2 erfolgt, bevorzugt wird jedoch die gemäß Fig. 1, d.h. bei der der Blechzuschnitt 6 die Rückwand 5 und die Wände 1, 2 enthält, die die Seitenwände S des Schrankkorpusses 10 bilden. Auf diese Ausführungsform wird nachfolgend allein Bezug genommen.

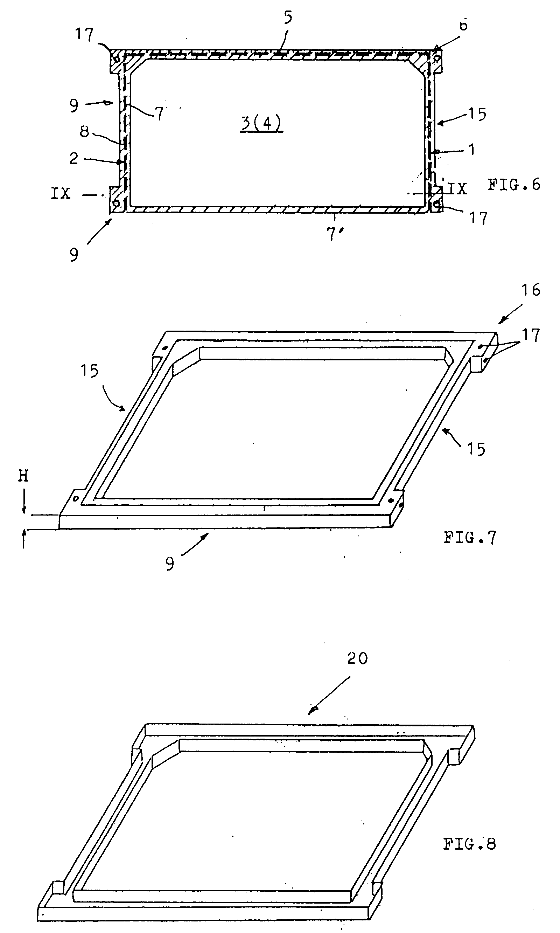

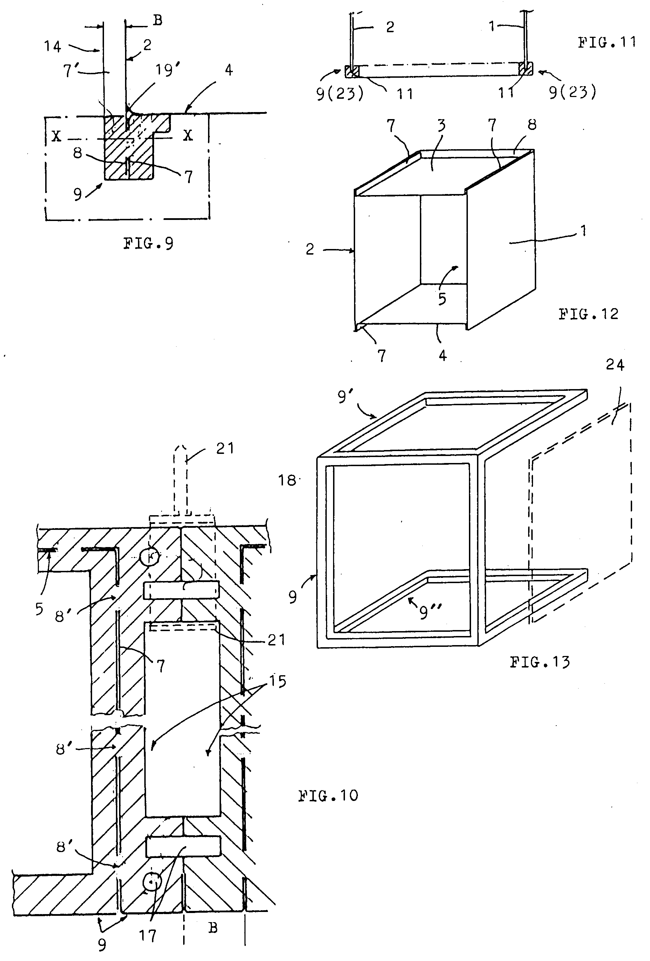

Die Abkantungen 7 der Wände 3, 4 und die sich dazu benachbart erstreckenden Ränder 8 der Wände 1, 2 sind mit zueinander fluchtenden Öffnungen 8' versehen, so daß der Kunststoff (siehe insbesondere Fig. 9), der sich ja beidseitig zu den Abkantungen 7 und den Rändern 8 befindet, in Verbindung bleibt. Vorteilhaft sind auch die freien Ränder 11 der Wände 1, 2 mit nach außen gerichteten Abkantungen 7 versehen und diese sind an ihren Enden ebenfalls mit in die Rahmen eingebunden, wobei ferner zweckmäßig die Abkantungen 7, 7' doppelt abgekröpft sind und im Querschnitt U-Profile bilden. Dabei erstrecken sich die Enden 12 der Wände 1, 2 und die freien Schenkel 13 der Doppelabkröpfungen 14 enden in jeweils einer Ebene E (siehe Fig. 3 u. 5). Diese Doppelabkröpfungen 14 tragen ebenfalls ganz wesentlich zur Stabilität des Schrankkorpusses bei. Die Distanz vom einen freien Schenkel 13 zum anderen entspricht dabei dem üblichen Rastermaß R derartiger Schränke, und die Breite B der Doppelabkröpfung 14 entspricht der üblichen Spanplattenstärke, d.h., es geht kein Raum im Vergleich zu Spanplattenschränken verloren.

In Vorderansicht gemäß Fig. 3 ergibt sich also ein metallisch blanker Rahmen um die Öffnung 18 des Schrankkorpusses 10, die mit einem am Rahmen in geeigneter Weise anzuschlagenden Türblatt (nicht dargestellt), verschließbar ist. Die sich am Frontrahmen ergebenden Stoßfugen 19 sind dabei durch den Kunststoff der Rahmen 9 ebenfalls mit geschlossen. Außerdem bildet der Kunststoff, wie aus Fig. 9 ersichtlich, an den inneren Längsfugen Hohlkehlen 19', die leicht sauberzuhalten sind.

Bezüglich der Randabkantungen 7 kann man sich aber auch darauf beschränken, daß diese, wie in Fig. 12 dargestellt, lediglich als Einfach-Abkantungen an den Wänden 3, 4 vorgesehen werden. Bei dieser Ausführungsform ergibt sich dann durch drei Eintauchvorgänge ein Rahmengebilde gemäß Fig. 13, das aus insgesamt drei Rahmen 9, 9', 9'' besteht, wobei zweckmäßig der die Türöffnung 18 begrenzende Rahmen 9 zuerst angelegt wird. In diesem Falle wird mit geeigneten Mitteln dafür gesorgt, daß der von den frontal nicht abgekanteten Wände 1 bis 4 gebildete Gesamtumfangsrand nicht auf dem Boden der Tauchrinne aufsitzt. Die in Fig. 8 dargestellte Tauchrinne 20 weicht in ihrer Form von einer solchen Tauchrinne für die Ausbildung eines Frontrahmens gemäß Fig. 13 ab, d.h., die in Fig. 8 dargestellte Tauchrinne 20 ist für die Ausbildung zweier nur oben und unten am Schrankkorpus 10 anzuordnenden Rahmen 9 (gemäß Fig. 6, 7) bestimmt.

Unter Bezug auf Fig. 10 weisen in Weiterbildung die Rahmen 9 außen sich zu den Seitenwänden S parallel erstreckende Ausnehmungen 15 auf, und ferner sind an den äußeren Ecken 16 der Rahmen 9 neben den Seitenwänden S horizontal und/oder vertikal orientierte Steckzapfenlöcher 17 angeordnet. Diese Ausführungsformen haben ihre Bedeutung darin, daß ein Schrankkorpus 10, wie beschrieben, in der Regel nicht für sich allein benutzt wird, sondern in Zusammenstellung mit anderen, gleichartig ausgebildeten Schränken, ganz abgesehen von der bereits angesprochen Stapellagerung und dem Transport von mehreren Schränken, der in der Regel ebenfalls mit möglichst geringer Raumbeanspruchung zu erfolgen hat.

Was die bspw. in der dargestellten Form ausgebildeten Ausnehmungen 15 betrifft, erleichtern diese bei zusammengestellten Schränken die Durchführung von Kabeln und sorgen außerdem für eine Belüftbarkeit zwischen den Schränken einer ganzen Schrankwand und ferner können entsprechend hakenförmig ausgebildete Wandanker 21, wie gestrichelt in Fig. 10 angedeutet, von unten in diese Ausnehmungen 15 eingreifen. Hat ein solcher Wandanker 21, wie dargestellt, etwa die doppelte Breite einer Ausnehmung 15, so ist automatisch für den seitlich anzuschließenden Schrankkorpus die gleiche Anordnungshöhe gewährleistet. Nach der Installation der Schränke können die Ausnehmungen 15 zwischen zwei Schränken durch entsprechende Paßstücke verschlossen werden, um Schmutzansammlungen zwischen den Schränken zu unterbinden.

Die ebenfalls in der Fig. 10 dargestellte Anordnung von horizontal und vertikal orientierten Steckzapfenlöchern 17, die durch entsprechende und ziehbare Kerne an der Tauchrinne 20 in den Ecken 16 der Rahmen 9 erzeugt werden (siehe auch Fig. 7), sind insbesondere für die Stapellagerung und den gestapelten Transport solcher Schränke vorgesehen, die unter Verwendung von entsprechenden Steckzapfen im Stapel zueinander fixiert werden und somit nicht verrutschen können, was Kartonagenverpackungen für jeden einzelnen Schrankkorpus, wie bisher üblich, entbehrlich macht.

Abgesehen davon, daß die Rahmen 9 für eine ausreichende Aussteifung und auch Entdröhnung des Schrankkorpusses sorgen und dadurch relativ dünnes Edelstahlblech von bspw. nur 0,6 mm Stärke verwendet werden kann, ist vorteilhaft zur weiteren Aussteifung vorgesehen, mindestens die Seitenwände S mit Versteifungsprägungen 22 zu versehen, die, wie in Fig. 3, 4 angedeutet, zweckmäßig horizontal und mit Abstand zueinander als Regalbodenauflagen ausgebildet sind. Die vorerwähnte Abkröpfung nach außen hat im übrigen den Vorteil, daß die Abkröpfungen beim Einlegen der Regalböden nicht im Wege stehen, und im Innenraum des Schrankkorpusses ergeben sich keine scharfen Kanten, an denen man sich beim Herausnehmen von Gegenständen verletzen könnte.

Für Schränke, die allein hängen oder stehen, bzw. die die Seitenflanken einer ganzen Schrankwand bilden, ist vorgesehen, den Schrankkorpus 10 mit einem Füllstück 22, wie in Fig. 13 gestrichelt angedeutet, auszustatten, das je nach Gestaltung der dort befindlichen Rahmen bzw. Rahmenteile entsprechend formangepaßt und bemessen ist und das mit geeigneten Haltemitteln zwischen den Rahmen bzw. an den betreffenden Seitenwänden S fixiert wird.

## Patentansprüche

1. Schrankkorpus, insbesondere zur Verwendung als Schrankteil für aus entsprechenden Scharnkteilen zusammenfügbare Einbauküchenschrankwände, bestehend aus vier Wänden und aus einer Korpusrückwand, wobei zwei sich gegenüberstehende Wände (1, 2) und die Rückwand (5) aus einem Blechzuschnitt (6) gebildet und die mit Randabkantungen (7) versehenen beiden anderen Wände (3, 4) ebenfalls aus Blech mit ihren Abkantungen (7) in die freien Querschnitte zwischen Rückwand (5) und den beiden anderen Wänden (1, 2) eingefügt sind
**dadurch gekennzeichnet**,
daß die Abkantungen (7) mit den benachbarten Rändern (8) der anderen Wände (1, 2) in je einen Rahmen (9) aus gießbarem Kunststoff miteinander eingebunden sind.

2. Schrankkorpus nach Anspruch 1,
**dadurch gekennzeichnet**,
daß der Blechzuschnitt (6) die Rückwand (5) und die Wände (1, 2) enthält, die die Seitenwände (S) des Schrankkorpus (10) bilden.

3. Schrankkorpus nach Anspruch 2,
**dadurch gekennzeichnet**,
daß die Abkantungen (7) und die sich dazu benachbart erstreckenden Ränder (8) mit zueinander fluchtenden Öffnungen (8') versehen und diese von dem die Rahmen (9) bildenden Kunststoff durchgriffen sind.

4. Schrankkorpus nach einem der Ansprüche 1 bis 3,
**dadurch gekennzeichnet**,
daß auch die freien Ränder (11) der Wände (1, 2) mit Abkantungen (7') versehen und diese an ihren Enden ebenfalls mit in die Rahmen (9) eingebunden sind.

5. Schrankkorpus nach Anspruch 4,
**dadurch gekennzeichnet**,
daß die Abkantungen (7, 7') der Wände (1, 2; 3, 4) in bezug auf den Korpus (10) an diesem nach außen weisend angeordnet sind.

6. Schrankkorpus nach Anspruch 5,
**dadurch gekennzeichnet**,
daß die Abkantungen (7, 7') doppelt abgekröpft sind und im Querschnitt U-Profile bilden, wobei sich die Enden (12) der Wände 1, 2) und die freien Schenkel (13) der Doppelabkröpfungen (14) in jeweils einer Ebene (E) erstrecken.

7. Schrankkorpus nach Anspruch 6,
**dadurch gekennzeichnet**,
daß die Rahmen (9) außen sich zu den Seitenwänden (S) parallel erstreckende Ausnehmungen (15) aufweisen.

8. Schrankkorpus nach Anspruch 6 oder 7,
**dadurch gekennzeichnet**,
daß die Doppelabkröpfungen (14) in ihrem Erstreckungsbereich die äußeren Begrenzungen der Rahmen (9) bilden.

9. Schrankkorpus nach einem der Ansprüche 1 bis 8,
**dadurch gekennzeichnet**,
daß in den äußeren Ecken (16) der Rahmen (9) neben den Seitenwänden (S) horizontal und/oder vertikal orientierte Steckzapfenlöcher (17) angeordnet sind.

10. Schrankkorpus nach einem der Ansprüche 1 bis 9,
**dadurch gekennzeichnet**,
daß die Rahmen (9) eine Höhe (H) aufweisen, die der Höhe der Abkantungen (7) entspricht.

11. Schrankkorpus nach einem der Ansprüche 1 bis 10,
**dadurch gekennzeichnet**,
daß mindestens die Seitenwände (S) mit Versteifungsprägungen (22) versehen sind.

12. Schrankkorpus nach Anspruch 11,
**dadurch gekennzeichnet**,
daß die Versteifungsprägungen (22) horizontal und mit Abstand zueinander als Regalbodenauflagen ausgebildet sind.

13. Schrankkorpus nach einem der Ansprüche 1 bis 3,
**dadurch gekennzeichnet**,
daß auch die freien Ränder (11) der Wände (1, 2) mit Verblendungsleisten (23) aus gießbarem Kunststoff versehen sind.

14. Schrankkorpus nach einem der Ansprüche 1 bis 3, 7 und 9 bis 12,
**dadurch gekennzeichnet**,
daß am Schrankkorpus (10) ein die Türöffnung (18) umschließender Rahmen (9) und ein oberer und unterer Rahmen (9', 9'') angeordnet sind.

15. Schrankkorpus nach einem der Ansprüche 1 bis 14,
**dadurch gekennzeichnet**,
daß an mindestens einer Seitenflanke parallel zur Seitenwand (S) zwischen den Rahmen (9) ein Füllstück (22) angeordnet ist.

16. Schrankkorpus nach einem der Ansprüche 1 bis 15,
**dadurch gekennzeichnet**,
daß der Blechzuschnitt (6) und die beiden anderen Wände (3, 4) aus dünnem Edelstahlblech von 0,4 bis 0,8 Stärke gebildet sind.
